# EUROPEAN PATENT SPECIFICATION

(11) **EP 4 184 326 B1**
(45) Date of publication and mention of the grant of the patent: **10.09.2025**
(21) Application number: 21843419.9
(22) Date of filing: 14.07.2021
(51) Int. Cl.: G06F 9/54, G06F 21/62, G06F 21/44, G06F 21/12, G06F 21/52, G06F 9/451

(54) **LOCAL SERVICE PROVISION METHOD AND APPARATUS, DEVICE, AND STORAGE MEDIUM**
VERFAHREN UND VORRICHTUNG ZUR BEREITSTELLUNG LOKALER DIENSTE, VORRICHTUNG UND SPEICHERMEDIUM
PROCÉDÉ ET APPAREIL DE FOURNITURE DE SERVICE LOCAL, DISPOSITIF, ET SUPPORT DE STOCKAGE

(30) Priority: 14.07.2020 CN 202010677066
(43) Date of publication of application: 24.05.2023
(73) Proprietor: Hangzhou Hikvision Digital Technology Co., Ltd., Hangzhou, Zhejiang 310051 (CN)
(72) Inventor: XU, Feng, Hangzhou, Zhejiang 310051 (CN)
(74) Representative: Goddar, Heinz J.
(86) International application number: PCT/CN2021/106229
(87) International publication number: WO 2022/012586

(56) References cited:
- CN-A- 103 064 738
- CN-A- 106 686 038
- CN-A- 109 960 551
- CN-A- 110 633 156
- CN-A- 110 909 282
- CN-A- 111 176 752
- CN-A- 111 182 010
- US-A1- 2007 260 702
- US-A1- 2014 207 566

## Description

### TECHNICAL FIELD

The present disclosure relates to the field of software technologies, and in particular to a local service provision method and apparatus, device, and storage medium.

### BACKGROUND

Some functions for displaying network information resources to users are based on browsers. For example, browsers provide users with World Wide Web (Web) services by loading Web pages. However, due to limitation of a browser's own performance, the browser's own kernel engine cannot meet the needs of providing more services.

In order to compensate for the limitation of the browser's own performance, a service process generally runs in the background, and through a connection established between the service process and the browser, the service process can provide needed services.

However, in some cases, a single service process can no longer meet the needs, and multiple service processes are required to run on the same device. Therefore, it becomes an urgent problem to guarantee that each service process provides services for a correct object.

Document CN110633156A discloses a method and a device for associating a browser with an application program, electronic equipment and a storage medium. The method comprises receiving a window request instruction from a Web client through connection between a locally specified service process and the Web client; searching for a specified browser window where the Web client is located through a local specified service process according to the window request instruction, and creating an application program window used for being associated with the specified browser window; and associating the application window to the specified browser window through a local specified service process. The required application can be presented on the Web client, and the data service of the application is not limited by the performance of the Web client.

Document CN10686038A discloses a method and a device for calling a cloud desktop. The method comprises receiving a trigger signal, wherein the trigger signal is used to trigger a server to be connected with a cloud desktop corresponding to a browser; and calling a specified executable program bound to a specified protocol in the registry of the cloud desktop, and calling the connection parameters of the cloud desktop and the server to the server through the specified executable program, wherein the specified protocol is a protocol supported by multiple browsers. This solves the problem that a specified protocol only supports Internet explorer but fails to support other browsers in cloud desktop calling in the related technologies. The mode of cloud desktop start is extended, and the flexibility of cloud desktop start is improved.

### SUMMARY

In view of the above, the present disclosure provides a local service provision method and apparatus, device, storage medium, and computer program, which are beneficial to ensure that a service process provides services for a correct object.

A first aspect of the present disclosure provides a local service provision method which comprises the following operations performed by a service process in an electronic device:

receiving a connection request initiated by a browser window for a remote user loaded in the electronic device, wherein the electronic device has more than one desktop system into which respective remote users are capable of logging; in response to determination that the service process and the browser window belong to a same identical desktop system in the electronic device according to the received connection request, establishing a connection between the service process and the browser window;
providing a local service to the browser window via the established connection.

According to one embodiment of the present disclosure, the connection request carries a first identifier, the first identifier being associated with current attribute information of the browser window, the attribute information being for representing the browser window; and
the determination that the service process and the browser window belong to the identical desktop system according to the received connection request, comprises:
in case that a browser window having attribute information associated with the first identifier exists in at least one application window of the desktop system corresponding to the service process, determining that the service process and the browser window belong to the identical desktop system.

According to one embodiment of the present disclosure, before the connection request is sent by the browser window, original attribute information of the browser window is modified to be associated with the first identifier.

According to one embodiment of the present disclosure, providing the local service for the browser window via the established connection comprises:
receiving a request for creating a window which is sent from the browser window via the connection, the request for creating the window carrying a second identifier, the second identifier being associated with current attribute information of the browser window, the attribute information being for representing the browser window;
in response to finding out a browser window having attribute information associated with the second identifier in at least one application window of the desktop system corresponding to the service process, creating an association window for the browser window and associating the association window with the browser window.

According to one embodiment of the present disclosure, associating the association window with the browser window comprises:
embedding the association window into the browser window as a sub-window of the browser window;
   or,
controlling the association window to follow the browser window according to a set following mode, so as to adjust a location of the association window in accordance with the following mode when a location of the browser window is changed.

According to one embodiment of the present disclosure, after the connection between the service process and the browser window is established, the local service provision method further comprises:
returning, to the browser window, a third identifier for interaction between the service process and the browser window.

According to one embodiment of the present disclosure, the first identifier is unique among all desktop systems corresponding to respective service processes in the electronic device.

According to one embodiment of the present disclosure, the second identifier is unique in the desktop system corresponding to the service process.

According to one embodiment of the present disclosure, after the connection between the service process and the browser window is established, the local service provision method further comprises:
when receiving a request for escalating a user privilege from the browser window via the connection, performing an operation for escalating the user privilege according to the request for escalating the user privilege, and restarting the service process after the operation for escalating the user privilege is completed to make the operation for escalating the user privilege take effect, and returning to perform the respective steps for establishing the connection between the service process and the browser window.

A second aspect of the present disclosure provides a local service provision apparatus comprising:
a connection establishment module, configured for receiving a connection request initiated by a browser window for a remote user loaded in an electronic device, wherein the electronic device has more than one desktop system into which respective remote users are capable of logging; in response to determination that a service process and the browser window belong to a same desktop system in the electronic device according to the received connection request, establishing a connection between the service process and the browser window; and
a service provision module, configured for providing a local service for the browser window via the established connection.

A third aspect of the present disclosure provides an electronic device comprising a processor and a memory storing a program called by the processor; wherein when executing the program, the processor implements the local service provision method as described in the preceding embodiments.

A fourth aspect of the present disclosure provides a machine-readable storage medium, on which a program is stored, wherein the program, when executed by a processor, implements the local service provision method as described in the aforementioned embodiments.

A fifth aspect of the present disclosure provides a computer program, which is stored in a machine-readable storage medium, wherein the computer program, when executed by a processor, implements the local service provision method as described in the preceding embodiments.

Compared with the prior art, the embodiments of the present disclosure provide the following beneficial effects:
the local service provision method of the present disclosure can establish, when an electronic device is running multiple service processes, according to a connection request sent by a browser window, in response to a service process and the browser window belonging to an identical desktop system, a connection between the browser window and the service process, so that each of the multiple service processes can provide services for the correct browser window, thus avoiding affecting user experience.

### BRIEF DESCRIPTION OF THE DRAWINGS

FIG. 1 is a schematic diagram of an application scenario provided by an embodiment of the present disclosure.
FIG. 2 is a schematic flow diagram of a local service provision method provided by an embodiment of the present disclosure.
FIG. 3 is a schematic flow diagram of a local service provision method provided by another embodiment of the present disclosure.
FIG. 4 is a schematic flow diagram of associating an association window with a browser window provided by an embodiment of the present disclosure.
FIG. 5 is a schematic flow diagram of associating an association window with a graphical interface to a browser window provided by an embodiment of the present disclosure.
FIG. 6 is a structural block diagram of a local service provision apparatus provided by an embodiment of the present disclosure.
FIG. 7 is a structural block diagram of an electronic device provided by an embodiment of the present disclosure.

### DETAILED DESCRIPTION OF THE EMBODIMENTS

Examples will be illustrated in detail herein, examples of which are illustrated in the accompanying drawings. Where the following description refers to the drawings, the same numerals in different drawings refer to the same or similar elements unless otherwise indicated. The implementations described in the following examples are not intended to represent all embodiments consistent with the present disclosure. Rather, they are merely examples of devices and methods consistent with some aspects of the present disclosure as detailed in the appended claims.

The terms used in the present disclosure are solely for the purpose of describing particular embodiments and not intended to limit the present disclosure. The singular forms "one", "the" and "this" used in this disclosure and the appended claims are intended to include the plural forms as well, unless the context clearly indicates otherwise. It should also be understood that the term "and/or" as used herein refers to and includes any or all possible combinations of one or all associated listed items.

It should be understood that, although the terms first, second, third and the like may be used to describe various information in the present disclosure, such information should not be limited by these terms. These terms are only used to distinguish the same type of information from each other. For example, without departing from the scope of this disclosure, the first information may also be referred to as the second information, and similarly, the second information may also be referred to as the first information. Depending on the context, the word "if" as used herein can be interpreted as "at the time" or "when" or "in response to determining".

In the related art, a service process runs in the background to provide services to a browser window. However, in some cases, running a single service process in a device can no longer satisfy the requirements. For example, when multiple users log into multiple desktop systems of a device at the same time, if the browser windows on the respective desktop systems requires the service process to provide services, it is impossible for one service process to handle them.

Therefore, service processes may be allocated to the desktop systems respectively in an electronic device, so that each desktop system has a corresponding service process. When a browser window on a certain desktop system needs to connect with a service process, because multiple service processes run in the electronic device, the browser window may connect with a service process corresponding to another desktop system, which thus provides services to the misconnected browser window.

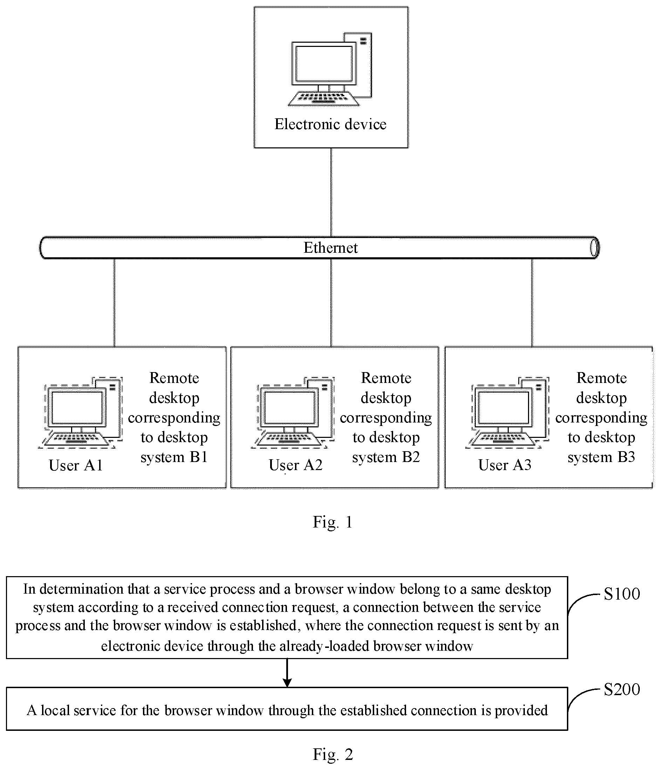

See Fig. 1, assumed the electronic device is a server having a *Windows* system, and is connected to three remote terminals via *Ethernet.* A user A1, a user A2 and a user A3 respectively log into different desktop systems of the electronic device through those three remote terminals. The user A1 logs into a desktop system B1, the user A2 logs into a desktop system B2, and the user A3 logs into a desktop system B3. On the remote terminals, remote desktops will be displayed corresponding to the desktop systems logged by the users, respectively. While a user logs into a corresponding desktop system, the electronic device will run a service process corresponding to that desktop system.

If the browser window in the desktop system B1 needs a service process to provide services, but the browser window mistakenly established a connection with the service process corresponding to the desktop system B2. This will cause the operations of the user A1 on the browser not displayed on the remote desktop corresponding to the desktop system B1, but instead displayed on the remote desktop corresponding to the desktop system B2, and even the followings will occur.

First, window functions such as preview, playback or the like are affected. When the user A1 needs to create a (preview or playback) window, the electronic device will create the window in the desktop system B2. In other words, the newly established window will not be displayed on the remote desktop of the user A1, but rather on the remote desktop of the user A2.

Second, non-window functions such as Search Active Device Protocol (SADP), image cutting or the like are affected. Taking SADP as an example, implementation of the SADP function generally requires an administrator ID. If the user A1 is not an administrator, his or her privilege needs to be escalated (hereinafter referred to as "escalating a user privilege") to implement SADP, and the service process needs to be restarted to complete the escalation of the user privilege. If the service process is misconnected to the browser window in the desktop system of the user A2, and the user A2 is using the window functions such as preview, playback or the like, restart of the service process will affect the use of these functions for the user A2.

This shows that, in the case of running multiple service processes on the same device, it becomes an urgent problem regarding how to guarantee each service process to provide services for a correct object.

The local service provision method of the present disclosure can establish, when an electronic device is running multiple service processes, according to a connection request sent by a browser window and in response to a service process and the browser window belonging to an identical desktop system, a connection between the browser window and the service process, so that each of the multiple service processes can provide services for the correct browser window, thus avoiding affecting user experience.

The local service provision method according to embodiments of the present disclosure will be described in detail below, but should not be limited thereto.

In one embodiment, referring to Fig. 2, a local service provision method may include the following steps.

S100: in determination that a service process and a browser window belong to a same desktop system according to a received connection request, a connection between the service process and the browser window is established, where the connection request is sent by an electronic device through the already-loaded browser window.

S200: a local service for the browser window through the established connection is provided.

In an example, after the connection between the service process and the browser window is established, the service process may return an identifier to the browser window for subsequent interaction between the service process and the browser window, which may be called a "third identifier" to distinguish it from a first identifier and a second identifier hereinafter.

The above-described local service provision method may be applied to service processes in an electronic device. In an example, the electronic device here can be a personal computer (PC) device, a tablet or a server, and certainly not limited thereto, but can also be any other electronic device that supports running a service process and a browser. For example, the operating system on the electronic device can be a *Windows* system, a MAC system or the like. Different systems may utilize different methods to call a browser window, which can be adjusted specifically according to the actual situations.

As a specific embodiment, the above-described electronic device runs a plurality of service processes, and the local service provision method can be applied to any service process run by the electronic device. The electronic device may have multiple desktop systems, and each desktop system may correspond to at least one service process. In an example, each desktop system corresponds to one service process.

When a user logs into a desktop system, the electronic device will start and run a service process corresponding to that desktop system. Of course, the timing of running the service process is not limited to this and there may be any other manner. For example, after the user logs into the desktop system, the service process corresponding to the desktop system can be triggered and start running based on an instruction as required.

A service application corresponding to the service process can be installed on the electronic device through an installation package. The installation package can be obtained in any possible manner, such as by directly obtaining from an external storage device, downloading via network or the like.

As a specific embodiment, the above-mentioned electronic device is further loaded with at least one browser window, and each desktop system can have a browser window opened. In this embodiment of the disclosure, the browser serves as an example of a Web client to describe the local service provision method. Of course, the Web client is not limited to browsers, and this method also applies to scenarios where the Web client that connects and interacts with the service process is not a browser. Similarly, the browser window is only an example, and it is not restrictive. In addition, the form presented to a user may not be in the form of a browser window and can be changed according to the type and the hosted contents of the browser.

When the browser window requires a local service of the electronic device, it can send a connection request to the service process, to establish a connection between the browser window and the service process for obtaining the local service. The connection request can be a Websocket connection (WS connection) request, a Websocket connection for a SSL-based security transport (WSS connection) request, an HTTP connection request, or a HTTPS connection request, etc.

In some examples, when the browser window requires a local service of the electronic device, the browser window can send a connection request to all running service processes through the electronic device. In an example, different service processes are allocated with different ports in a port range of for example 16960 to 16969. For instance, the port of a service process P1 is 16960, and the port of another service process is 16961, and so on. In this way, when the browser window sends a connection request to the port range corresponding to the running service processes, a plurality of service processes may receive the connection request.

Taking any one service process (assuming the service process P1) that receives the connection request as an example, the above step S 100 is described below.

After the service process P1 receives the connection request, whether the service process P1 and the browser window that initiated the connection request belong to the same desktop system according to the connection request is determined. If the service process P1 and the browser window belong to the same desktop system, the connection between the service process P1 and the browser window is established.

Each service process has a corresponding desktop system respectively. If the desktop system corresponding to the service process P1 has the browser window which initiated the connection request, it means that the service process P1 and that browser window belong to an identical desktop system, that is, belonging to the desktop system corresponding to the service process P1.

In an example, a connection can be established based on the connection request, which could be a WS connection, a WSS connection, an HTTP connection, or an HTTPS connection, etc.

By the above step S100, the browser window that initiated the connection request and the service process that belongs to the same desktop system as the browser window, can be connected to realize the connection between the service process and the correct browser window.

Step S100 is described above, and step S200 will be described further below by using the service process P1 as an example.

After the connection between the service process P1 and the browser window is established, the service process P1 can provide services for the browser window through the connection with the browser window. For example, the service process P1 can create a window for the browser window in the desktop system corresponding to the service process P1. Continuously referring to Fig. 1, with the desktop system B1 corresponding to the service process P1 for instance, after the service process P1 is connected to the browser window that initiated the connection request in the desktop system B1, the service process P1 creates a window in the desktop system B1. This window will show on a remote desktop of the user A1, but will not show on a remote desktop of the user A2. As such, when the service process P1 is providing a local service for the browser window, this service will not be erroneously presented on a remote desktop of the user who does not need the service.

Step S200 is described above, and the local service provision method in the embodiment of the present disclosure will be more specifically described below.

In an embodiment, the connection request carries a first identifier associated with the current attribute information of the browser window. This attribute information is used to represent the browser window, and the first identifier will be different if the attribute information is different. In an example, the term "associated" means that the first identifier is consistent with the current attribute information of the browser window. In an example, the first identifier is unique for the desktop system corresponding to the service process P1. In some examples, the first identifier is unique among all desktop systems corresponding to the respective service processes of the electronic device. For example, the first identifier may be a Universally Unique Identifier (UUID) which is randomly generated by the system. However, of course, the first identifier is not limited to this. It can be any other identifier except UUID.

In some examples, the attribute information can include the title of the browser window, such as the name of the title bar for the browser window. Of course, this is not specifically limited. The attribute information may also include other information, so long as it can represent the browser window.

In an example, in step S100, the determination that the service process and the browser window belong to the same desktop system according to the received connection request, includes the following step.

S101: based on the first identifier carried by the connection request, in case where a browser window having attribute information associated with that first identifier exists in at least one application window of the desktop system corresponding to the service process, it is determined that the service process and the browser system belong to the same desktop system. A browser is a type of application, and a browser window of the browser is a type of application window.

Every desktop system in the electronic device can be presented through a top-level window, and all application windows of the desktop system are sub-windows belonging to this top-level window. In a presentation form, those sub-windows can be located inside the top-level window. The browser window which is an application window, can also serve as a sub-window of the top-level window.

In some examples, the service process P1 can parse out the first identifier from the connection request, and search all application windows of the desktop system corresponding to the service process P1 for an application window of which attribute information is associated with the first identifier. Since the browser window is an application window, when successfully found, it means that there indeed exists the application window of which attribute information is associated with the first identifier in all application windows of the desktop system corresponding to the service process P1. As such, it can be determined that the service process P1 and the browser window belong to an identical desktop system. The found application window is the browser window that initiated the connection request.

In the above way, when the desktop system corresponding to the service process P1 contains the browser window that initiated the connection request as well as other application windows, the service process P1 can utilize the first identifier for searching out the browser window, thus avoiding erroneously finding a wrong window and causing incorrect operation when multiple application windows work at the same time.

In an embodiment, before the connection request is sent by the browser window in the electronic device, the original attribute information of the browser window is modified to be associated with the first identifier. Here, the term "associated" includes various situations. For example, the original attribute information of the browser window is modified to be consistent with the first identifier, or modified to include the first identifier, etc.

There is a high probability that browser windows have an identical name. It is because, there are more than one type of browsers, such as the IE browser, the Firefox browser, the UC browser, the 360 browser or the like. These browsers may run in the same desktop system and open the same webpage during the same period of time. Of course, in addition to the identical name, the other attribute information may also be the same.

Therefore, the attribute information of the browser window can be modified before the browser window initiates a connection request, so that the attribute information of the browser window is associated with the first identifier. In a case where the first identifier is unique in the desktop system, the modified attribute information of the browser window is different from the attribute information of other application windows of the desktop system where the browser window is located. In some examples, in a case where the first identifier is unique in all desktop systems of the electronic device, the modified attribute information of the browser window differs from the attribute information of other application windows in all the desktop systems of the electronic device.

The original attribute information of the browser window can be stored in association with the first identifier, so that the original attribute information of the browser window can be viewed when needed, which is not specifically limited herein.

In an example, the first identifier may be randomly generated, or may be an unused identifier randomly obtained from a pre-stored identifier list, which is not specifically limited herein.

In an embodiment, in step S200, providing a local service to the browser window by the established connection includes the following steps.

S201: a request for creating a window from the browser window via the connection is received, the request for creating the window carrying a second identifier which is associated with the current attribute information of the browser window, the attribute information being for representing the browser window.

S202: in response to finding out a browser window of which attribute information is associated with the second identifier in at least one application window of the desktop system corresponding to the service process, an association window of the browser window is created, and the association window is associated with the browser window.

The second identifier is unique in the desktop system corresponding to the service process. In some examples, the second identifier may be the same or different from the first identifier. In a case where the second identifier is different from the first identifier, it can be an identifier determined for the browser window by the service process P1 after connected with the browser window and returned by the service process to the browser window. After having received the second identifier, the browser window modifies its attribute information and associates it with the second identifier.

The above finding method may include traversing all the application windows in the desktop system corresponding to the service process and checking whether the attribute information of the traversed application window is associated with the second identifier carried by the request for creating the window. If so, the traversed application window is the browser window which initiated the request for creating the window.

When receiving the request for creating the window, the service process P1 can also create an association window. For example, the association window can be blank. For another example, the association window can be customized. For example, the customized parameters can be configured in the service process P1, or the customized parameters can be carried in the request for creating the window and the association window is created based on the customized parameters.

The number of association windows is not limited and can be determined as required. When there are multiple association windows, the relations between the association windows can also be determined according to the customized parameters, such as cascading, unfolding, dislocating, etc. The relations between the respective application windows may be fixed or varied. For example, a first association window may be switched from on top of a second association window to beneath the second association window, and the first association window and the second association window are two different association windows created in the same desktop system.

When the browser window which sent the request for creating the window is found and the association window is created, the service process P1 can associate the association window with the browser window. For example, the association window can be set within the browser window and always located therein.

The association window can be a specified application client, and can connect with an application server to enable interaction, thereby loading the application data. The data service of the association window is independent from that of the browser window, and the application data can be loaded or processed by the association window regardless of the browser window. Therefore, the performance of the association window is not restricted by the browser window.

In the above method, the association window is associated with the browser window, but the data service of the association window is independent from that of the browser window. Moreover, the association window does not need to load data through the interface of the browser window. Therefore, the data service of the association window is not affected by the own performance of the browser window, nor does it need to parse the private information of the data for data playback. Thus, it can provide better service for the browser window without losing the association with the browser window.

In an example, the service process P1 when associated the association window to a browser window, can obtain a handle of the browser window and implement operations on the browser window via the handle. The handle is an identifier of the browser window in the system. It is thus possible to perform required operations (including association operations) on the browser window by calling respective call functions (for example, windows api) of the corresponding desktop system through the handle.

In an embodiment, in step S202, associating the association window to the browser window can include the following step.

S2021: the association window is embedded into the browser window as a sub-window of the browser window.

In a case where the browser window supports embedding of a sub-window, a parent-child relationship between the browser window and the association window can be established. The association window can be embedded into the browser window, namely the association window serving as a sub-window of the browser window.

Specifically, the handle of the browser window can be used to call a setParent function of the system to establish a parent-child relationship between the browser window and the association window, so that the association window can be embedded within the browser window as a sub-window of the browser window.

In an embodiment, in step S202, associating the association window to the browser window may include the following step.

S2022: controlling the association window to follow the browser window in a set following mode, so as to adjust a location of the association window according to the following mode when a location of the browser window is changed.

In a case where the browser window does not support embedding of a sub-window, a following mode can be opened, and the association window can be set at a specified location of the browser window and to automatically follow the browser window according to the following mode, so as to adjust its location when the browser window changes in location. As such, no matter how the browser window moves, the application window is always at the specified location of the browser window.

Due to different operating systems and different browsers, in a case where a browser cannot normally embed an application window, the following mode may be adopted in which the location of the application window is automatically adjusted when the location of the browser window changes, so as to associate the location of the browser window with that of the association window.

In an embodiment, after the connection between the service process and the browser window is established, the method further includes:
when receiving a request for escalating a user privilege from the browser window via the connection, performing an operation for escalating the user privilege according to the request for escalating the user privilege, and restarting the service process after the operation for escalating the user privilege is completed to make the operation for escalating the user privilege take effect.

Some functions of the service process P1 (such as SADP or the like) require a user having an administrator privilege. When a non-administrator user requires service of those functions by the service process P1, the service process P1 can return a prompt to the browser window indicating that the user privilege is insufficient thus presenting the prompt to the user in the browser window, and the user can send a request for escalating a user privilege to the service process P1 through the browser window.

Specifically, the request for escalating the user privilege can carry user information, so that the service process P1 can determine whether the user privilege can be escalated according to the user information after having received the request. If the user privilege can be escalated, an interface of a system function for escalating a user privilege can be called to perform an operation for escalating the user privilege on a designated privilege corresponding to the user information (such as the privilege corresponding to SADP), and the designated privilege is modified from prohibition from use to allowance for use. Later, the service process P1 is restarted to make the modified designated privilege in the service process P1 become effective.

During the operation for escalating the user privilege, since the service process P1 can provide local service for the correct object (i.e., the browser window that sends the request for escalating the user privilege), and the service process P1 and the browser window belong to an identical desktop system, other user desktop systems will not be affected, and the functions (such as window preview, playback or the like) being used by other users will not be interrupted by restarting the service process P1, so as to avoid affecting user experience.

Of course, after the user privilege is successfully escalated, if the user requires the service process P1 to provide service, the connection between the browser window and the service process P1 needs to be established again. The manner for establishing the connection has been already described in detail in the aforementioned embodiments, and thus will not be repeated herein.

The local service provision method of the present disclosure is described below in a more specific embodiment, still with the service process P1 in all service processes as an example.

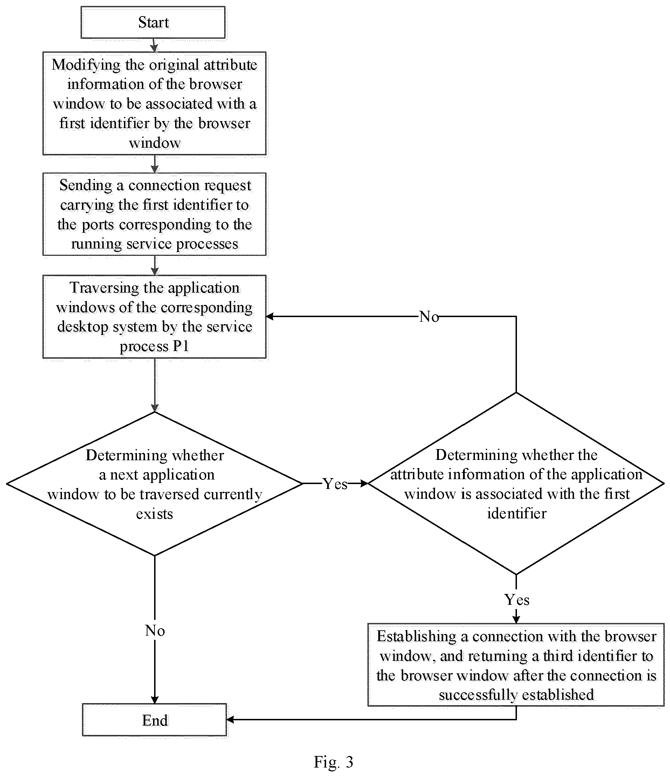

Referring to FIG. 3, when requires provision of a local service, the browser window can modify the original attribute information such as the title to be associated with the first identifier, and then can send a connection request carrying the first identifier to the ports corresponding to the running service processes, where these ports can be, for example, in a port range of 16960-16969 (for example, the service process P1 is 16960). The Service process P1 traverses the application windows of the corresponding desktop system, and determines whether a next application window to be traversed currently exists. If there is no next application window to be traversed currently, traversing is ended; if a next application window to be traversed currently exists, the next application window is traversed to check whether the attribute information of the traversed application window is associated with the first identifier; if the attribute information of the traversed window is not associated with the first identifier, returning to the step of determining whether a next application window to be traversed exists; if the attribute information of the traversed window is associated with the first identifier, establishing a connection with the browser window which initiated the connection request (i.e., the currently traversed application window), and returning a third identifier to the browser window after the connection is successfully established. The third identifier is used for interaction between the service process P1 and the browser window. In subsequent interaction process, the third identifier can be used to identify the connection between the service process P1 and the browser window. The third identifier may be unique in the desktop system corresponding to the service process P1.

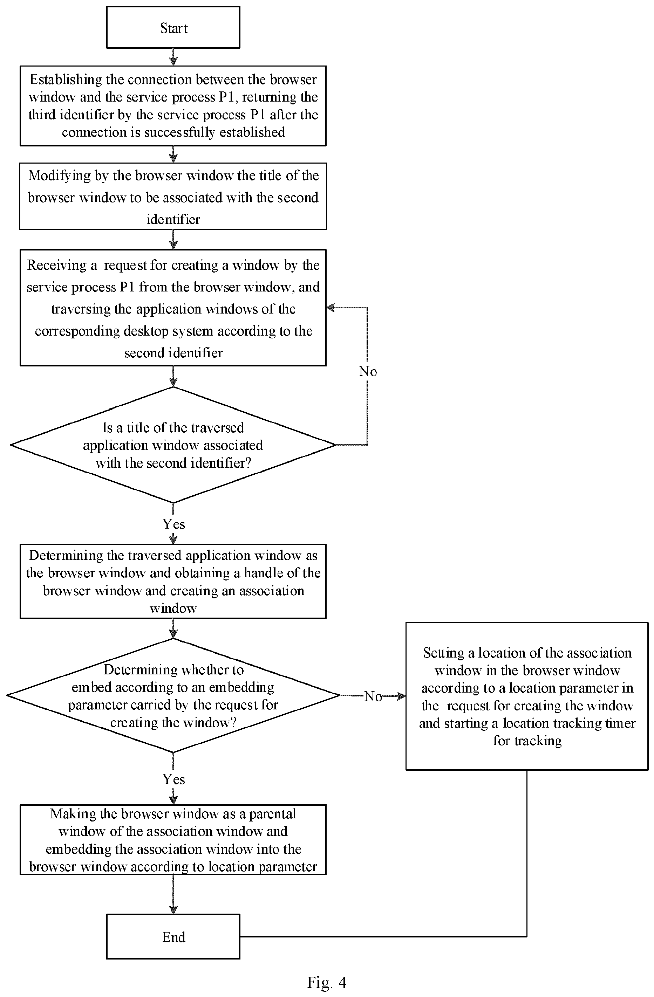

Referring to FIG. 4, when the connection between the browser window and the service process P1 is successfully established, the service process P1 returns a third identifier (e. g., a UUID) to the browser window, and the third identifier may be the same or different from the first identifier. The browser window can send a request for creating a window for indicating creation of an association window (which may include the location and size of the association window) to the service process P1. Before sending, the title of the browser window can be modified for association with the second identifier. Since the title of the browser window has been modified to be associated with the first identifier previously when the connection was established, here the title of the browser window can be further modified to be associated with the second identifier instead of the first identifier. In an example, if the first and second identifiers are identical, the modification operation can be omitted, and the first identifier can be directly utilized as the second identifier when sending a request for creating a window to the service process P1. In cases where the first identifier and the second identifier are different, the title of the browser window may for example be modified directly from the first identifier to the second identifier: document.title =UUID. Here, UUID is only used as an example, but when implemented, the first and second identifiers may also be other identifiers, as long as they are unique in the desktop system corresponding to the service process P1. In some examples, the second identifier can be identical with or different from the third identifier. In a case where the second identifier is identical to the third identifier, the third identifier which is returned by the service process P1 after the connection has been successfully established, can be directly used as the second identifier to modify the title of the browser window. After the service process P1 receives a request for creating a window, it traverses the application windows of the corresponding desktop system to find out whether there is a browser window with its title associated with the second identifier. When the browser window is found, a handle of the browser window is obtained and an association window is created. Whether the browser window supports embedding can be determined through an embedding parameter carried by the request for creating the window. If the browser window supports embedding, the browser window is used as a parental window of the association window, and the association window is embedded within the browser window according to location information. If the browser window does not support embedding, the location of the association window in the browser window is set according to a location parameter in the request for creating the window, and a location tracking timer is started for tracking.

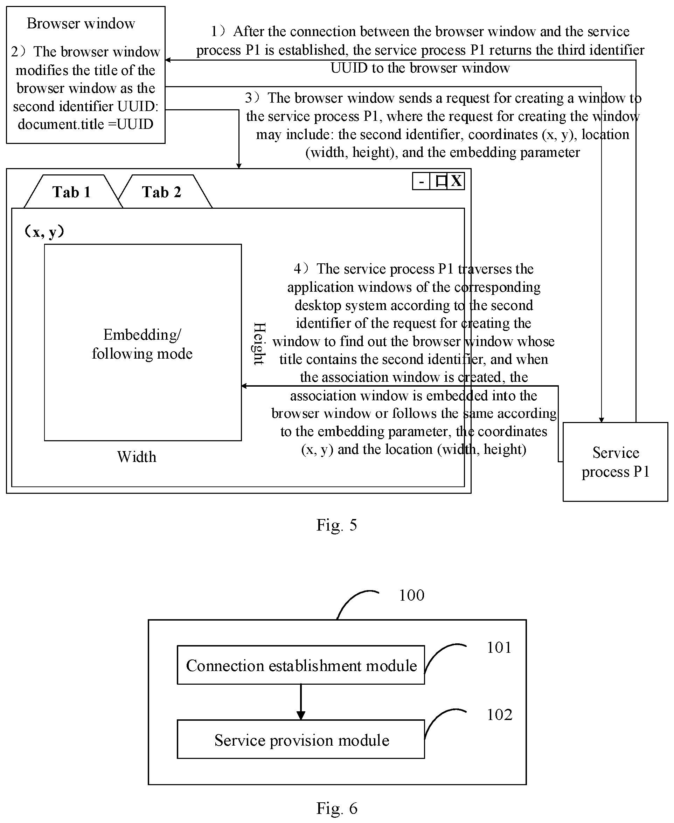

The process of associating an association window to a browser window is described in the following with an embodiment with a graphical interface. Referring to Fig. 5, the browser window is loaded in the browser, and as shown in Tab 1 in Fig. 5, the browser window interacts with the service process P1 as follows.
1) After the connection between the browser window and the service process P1 is established, the service process P1 returns the third identifier UUID to the browser window.
2) The browser window modifies the title of the browser window as the second identifier UUID: document.title =UUID.
3) The browser window sends a request for creating a window to the service process P1, where the request for creating the window may include: the second identifier, coordinates (x, y), location (width, height), and the embedding parameter which is used to indicate whether the association window is embedded into the browser window.
4) The service process P1 traverses the application windows of the corresponding desktop system according to the second identifier of the request for creating the window to find out the browser window whose title contains the second identifier, and when the association window is created, the association window is embedded into the browser window or follows the same according to the embedding parameter, the coordinates (x, y) and the location (width, height), so that the association window is embedded into Tab 1 of the browser window, or is located within Tab 1 and follows movement of the browser window.

A second aspect of the present disclosure provides a local service provision apparatus. As seen from Fig. 6, the apparatus 100 includes:
a connection establishment module 101, configured for receiving a connection request initiated by a browser window loaded in an electronic device; and in response to determination that a service process and the browser window belong to an identical desktop system according to the received connection request, establishing a connection between the service process and the browser window;
a service provision module 102, configured for providing a local service for the browser window via the established connection.

In an embodiment, the connection request carries a first identifier, the first identifier being associated with current attribute information of the browser window, the attribute information being for representing the browser window; and
the connection establishment module, when determining that the service process and the browser window belong to the identical desktop system according to the received connection request, is specifically for:
in case that a browser window having attribute information associated with the first identifier exists in at least one application window of the desktop system corresponding to the service process, determining that the service process and the browser window belong to the identical desktop system.

In an embodiment, before the connection request is sent, original attribute information of the browser window is modified to be associated with the first identifier.

In an embodiment, the service provision module, when providing the local service for the browser window via the established connection, is specifically for:
receiving a request for creating a window sent from the browser window via the connection, where the request for creating the window carries a second identifier associated with current attribute information of the browser window, and the attribute information is for representing the browser window;
in response to finding out a browser window having attribute information associated with the second identifier in at least one application window of the desktop system corresponding to the service process, creating an association window for the browser window and associating the association window with the browser window.

In an embodiment, the service provision module, when associating the association window with the browser window, is specifically for:
embedding the association window into the browser window as a sub-window of the browser window;
   or,
controlling the association window to follow the browser window according to a set following mode, so as to adjust a location of the association window in accordance with the following mode when a location of the browser window is changed.

In an embodiment, after the connection between the service process and the browser window is established, the connection establishment module returns to the browser window a third identifier for interaction between the browser window and the service process.

In an embodiment, the first identifier is unique among all desktop systems corresponding to respective service processes in the electronic device.

In an embodiment, the second identifier is unique in the desktop system corresponding to the service process.

In an embodiment, the local service provision apparatus further includes a user privilege escalation module, where, in case where a request for escalating a user privilege is received from the browser window via the connection, the user privilege escalation module is for performing an operation for escalating the user privilege according to the request for escalating the user privilege, and restarting the service process after the operation for escalating the user privilege is completed to make the operation for escalating the user privilege take effect. After the user privilege has been successfully escalated, the connection establishment module restarts the respective operations for establishing the connection between the service process and the browser window.

The process for implementing the functions and actions of the respective modules and units in the apparatus is detailed in the process of implementing the corresponding steps in the above method, and thus will not be described herein.

For the apparatus embodiments, since they basically correspond to the method embodiments, reference may be made to the partial description of the method embodiments for related parts. The apparatus embodiments described above are merely illustrative, where the unit described as separation components may or may not be physically separated, and the components shown as units may or may not be physical units.

The present disclosure also provides an electronic device which includes a processor, and a memory storing a program called by the processor; where when executing the program, the processor implements the local service provision method as described in the preceding embodiments.

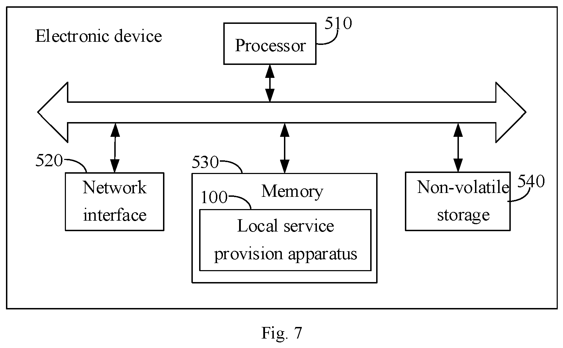

The embodiments of the local service provision apparatus of the present disclosure can be applied to an electronic device. Taking software implementation as an example, a logical device is formed by reading the corresponding computer program instructions into a non-volatile storage through the processor of the electronic device where the logical device is located. From a hardware perspective, as shown in Fig. 7 which is a hardware structural diagram of an electronic device where the local service provision apparatus 100 is located in accordance with an example of the present disclosure, the electronic device where the apparatus 100 is located may also include other hardware according to actual functions of the electronic device, in addition to a processor 510, a memory 530, a network interface 520, and a non-volatile storage 540 shown in Fig. 9, which will not be repeated herein.

The present disclosure also provides a machine-readable storage medium, which a program is stored on, and the program, when executed by a processor, implements the local service provision method as described in the preceding embodiments.

The present disclosure also provides a computer program, which is stored in a machine-readable storage medium, and the computer program, when executed by a processor, causes the processor to implement the local service provision method as described in the aforementioned embodiments.

The present disclosure also provides a computer program product for storing computer-readable instructions, where the instructions when executed, cause a computer to perform the local service provision method as described in the preceding embodiments.

The present disclosure may take the form of a computer program product implemented on one or more storage media having program codes therein, including but not limited to a disk storage, a CD-ROM, an optical storage, etc.). Machine-readable storage media includes both permanent and non-permanent, removable, and non-removable media, enabling information storage by any method or technology. Information can be computer-readable instructions, data structures, modules of programs, or other data. Examples of machine-readable storage media include, but are not limited to, a phase-change random access memory (PRAM), a static random access memory (SRAM), a dynamic random access memory (DRAM), other types of random access memory (RAM), a read-only memory (ROM), an electrically erasable programmable read-only memory (EEPROM), a flash memory or other memory technologies, a compact disc read-only memory (CD-ROM), a digital video disc (DVD) or another optical storage, a magnetic tape cartridge, a disk storage or other magnetic storage devices or any other non-transmission medium, that can be used to store information that can be accessed by a computing device.

The above described are only preferred embodiments of the disclosure and are not intended to restrict the present disclosure.

## Claims

1. A local service provision method comprises:
performing, by a service process in an electronic device, operations comprising:
receiving a connection request initiated by a browser window for a remote user loaded in the electronic device, wherein the electronic device has more than one desktop system into which respective remote users are capable of logging;
in response to determination that the service process and the browser window belong to a same desktop system in the electronic device according to the received connection request, establishing (S100) a connection between the service process and the browser window; and
providing (S200) a local service for the browser window via the established connection.

2. The local service provision method of claim 1, wherein the connection request carries a first identifier, the first identifier being associated with current attribute information of the browser window, the attribute information being for representing the browser window; and
the determination that the service process and the browser window belong to the same desktop system according to the received connection request, comprises:
in case that a browser window having attribute information associated with the first identifier exists in at least one application window of the desktop system corresponding to the service process, determining that the service process and the browser window belong to the same desktop system.

3. The local service provision method of claim 2, wherein before the connection request is sent by the browser window, original attribute information of the browser window is modified to be associated with the first identifier.

4. The local service provision method of claim 1, wherein providing the local service for the browser window via the established connection comprises:
receiving a request for creating a window from the browser window via the connection, the request for creating the window carrying a second identifier, the second identifier being associated with current attribute information of the browser window, the attribute information being for representing the browser window;
in response to finding out a browser window having attribute information associated with the second identifier in at least one application window of the desktop system corresponding to the service process, creating an association window for the browser window, and associating the association window with the browser window.

5. The local service provision method of claim 4, wherein associating the association window with the browser window comprises:
embedding the association window into the browser window as a sub-window of the browser window;
or
controlling the association window to follow the browser window according to a set following mode, so as to adjust a location of the association window in accordance with the following mode when a location of the browser window is changed.

6. The local service provision method of any one of claims 1 to 5, wherein after the connection between the service process and the browser window is established, the local service provision method further comprises:
returning, to the browser window, a third identifier for interaction between the service process and the browser window.

7. The local service provision method of claims 2 or 3, wherein the first identifier is unique among all desktop systems corresponding to respective service processes in the electronic device.

8. The local service provision method of claim 4, wherein the second identifier is unique in the desktop system corresponding to the service process.

9. The local service provision method of any one of claims 1 to 8, wherein after the connection between the service process and the browser window is established, the local service provision method further comprises:
when receiving a request for escalating a user privilege from the browser window via the connection, performing an operation for escalating the user privilege according to the request for escalating the user privilege, and restarting the service process after the operation for escalating the user privilege is completed to make the operation for escalating the user privilege take effect, and returning to perform the respective steps for establishing the connection between the service process and the browser window after the user privilege is successfully escalated.

10. A local service provision apparatus (100), comprises:
a connection establishment module (101), configured for receiving a connection request initiated by a browser window for a remote user loaded in an electronic device,
wherein the electronic device has more than one desktop system into which respective remote users are capable of logging;
in response to determination that a service process and the browser window belong to a same desktop system in the electronic device according to the received connection request, establishing a connection between the service process and the browser window; and
a service provision module (102), configured for providing a local service for the browser window via the established connection.

11. The local service provision apparatus (100) of claim 10, wherein the connection request carries a first identifier, the first identifier being associated with current attribute information of the browser window, the attribute information being for representing the browser window; and
the connection establishment module (101), when determining that the service process and the browser window belong to the same desktop system according to the received connection request, is specifically for:
in case that a browser window having attribute information associated with the first identifier exists in at least one application window of the desktop system corresponding to the service process, determining that the service process and the browser window belong to the same desktop system;
wherein, before the connection request is sent, original attribute information of the browser window is modified to be associated with the first identifier.

12. The local service provision apparatus (100) of claim 10, wherein
the service provision module (102), when providing the local service for the browser window via the established connection, is specifically for:
receiving a request for creating a window sent from the browser window via the connection, the request for creating the window carrying a second identifier, the second identifier being associated with current attribute information of the browser window, the attributing information being for representing the browser window;
in response to finding out a browser window having attribute information associated with the second identifier in at least one application window of the desktop system corresponding to the service process, creating an association window for the browser window, and associating the association window with the browser window;
the service provision module (102), when associating the association window with the browser window, is specifically for:
embedding the association window into the browser window as a sub-window of the browser window;
or,
controlling the association window to follow the browser window according to a set following mode, so as to adjust a location of the association window in accordance with the following mode when a location of the browser window is changed.

13. An electronic device, **characterized in that** the electronic device comprises a processor (510) and a memory (540) storing a program called by the processor (510), wherein when executing the program, the processor (510) implements the local service provision method according to any one of claims 1 to 9.

14. A machine-readable storage medium, **characterized in that** a program is stored on the machine-readable storage medium, wherein the program, when executed by a processor, implements the local service provision method according to any one of claims 1 to 9.

15. A computer program, wherein the computer program, when executed by a processor, implements the local service provision method according to any one of claims 1 to 9.

## Patentansprüche

1. Lokales Dienstbereitstellungsverfahren, umfassend:
Durchführen, von einem Dienstprozess in einer elektronischen Vorrichtung, von Operationen, umfassend:
Empfangen einer Verbindungsanforderung, die durch ein Browser-Fenster für einen entfernten Benutzer, der in die elektronische Vorrichtung geladen ist, initiiert wird,
wobei die elektronische Vorrichtung mehr als ein Desktop-System aufweist, in das sich jeweilige entfernte Benutzer einloggen können;
als Reaktion auf eine Bestimmung, dass der Dienstprozess und das Browser-Fenster zu demselben Desktop-System in der elektronischen Vorrichtung gemäß der empfangenen Verbindungsanforderung gehören, Herstellen (S100) einer Verbindung zwischen dem Dienstprozess und dem Browser-Fenster; und
Bereitstellen (S200) eines lokalen Dienstes für das Browser-Fenster über die hergestellte Verbindung.

2. Lokales Dienstbereitstellungsverfahren nach Anspruch 1, wobei die Verbindungsanforderung eine erste Kennung trägt, wobei die erste Kennung mit aktuellen Attributinformationen des Browser-Fensters assoziiert ist, wobei die Attributinformationen zum Darstellen des Browser-Fensters dienen; und
die Bestimmung, dass der Dienstprozess und das Browser-Fenster zu demselben Desktop-System gemäß der empfangenen Verbindungsanforderung gehören, umfasst:
falls ein Browser-Fenster mit Attributinformationen, die mit der ersten Kennung assoziiert sind, in mindestens einem Anwendungsfenster des Desktop-Systems, das dem Dienstprozess entspricht, vorhanden ist, Bestimmen, dass der Dienstprozess und das Browser-Fenster zu demselben Desktop-System gehören.

3. Lokales Dienstbereitstellungsverfahren nach Anspruch 2, wobei, bevor die Verbindungsanforderung durch das Browser-Fenster gesendet wird, ursprüngliche Attributinformationen des Browser-Fensters modifiziert werden, um mit der ersten Kennung assoziiert zu werden.

4. Lokales Dienstbereitstellungsverfahren nach Anspruch 1, wobei das Bereitstellen des lokalen Dienstes für das Browser-Fenster über die hergestellte Verbindung umfasst:
Empfangen einer Anforderung zum Erzeugen eines Fensters von dem Browser-Fenster über die Verbindung, wobei die Anforderung zum Erzeugen des Fensters eine zweite Kennung trägt, wobei die zweite Kennung mit aktuellen Attributinformationen des Browser-Fensters assoziiert ist, wobei die Attributinformationen zum Darstellen des Browser-Fensters dienen;
als Reaktion auf ein Herausfinden eines Browser-Fensters mit Attributinformationen, die mit der zweiten Kennung assoziiert sind, in mindestens einem Anwendungsfenster des Desktop-Systems, das dem Dienstprozess entspricht, Erzeugen eines Assoziationsfensters für das Browser-Fenster und Assoziieren des Assoziationsfensters mit dem Browser-Fenster.

5. Lokales Dienstbereitstellungsverfahren nach Anspruch 4, wobei das Assoziieren des Assoziationsfensters mit dem Browser-Fenster umfasst:
Einbetten des Assoziationsfensters in das Browser-Fenster als ein Unterfenster des Browser-Fensters;
oder
Steuern des Assoziationsfensters, um dem Browser-Fenster gemäß einem eingestellten Folgemodus zu folgen, um einen Ort des Assoziationsfensters gemäß dem Folgemodus anzupassen, wenn ein Ort des Browser-Fensters geändert wird.

6. Lokales Dienstbereitstellungsverfahren nach einem der Ansprüche 1 bis 5, wobei, nachdem die Verbindung zwischen dem Dienstprozess und dem Browser-Fenster hergestellt ist, das lokale Dienstbereitstellungsverfahren ferner umfasst:
Zurückgeben, an das Browser-Fenster, einer dritten Kennung zur Interaktion zwischen dem Dienstprozess und dem Browser-Fenster.

7. Lokales Dienstbereitstellungsverfahren nach Anspruch 2 oder 3, wobei die erste Kennung unter allen Desktop-Systemen, die jeweiligen Dienstprozessen in der elektronischen Vorrichtung entsprechen, eindeutig ist.

8. Lokales Dienstbereitstellungsverfahren nach Anspruch 4, wobei die zweite Kennung in dem Desktop-System, das dem Dienstprozess entspricht, eindeutig ist.

9. Lokales Dienstbereitstellungsverfahren nach einem der Ansprüche 1 bis 8, wobei, nachdem die Verbindung zwischen dem Dienstprozess und dem Browser-Fenster hergestellt ist, das lokale Dienstbereitstellungsverfahren ferner umfasst:
beim Empfangen einer Anforderung zum Eskalieren eines Benutzerprivilegs von dem Browser-Fenster über die Verbindung, Durchführen einer Operation zum Eskalieren des Benutzerprivilegs gemäß der Anforderung zum Eskalieren des Benutzerprivilegs,
und Neustarten des Dienstprozesses, nachdem die Operation zum Eskalieren des Benutzerprivilegs abgeschlossen ist, um die Operation zum Eskalieren des Benutzerprivilegs wirksam zu machen, und Zurückkehren zum Durchführen der jeweiligen Schritte zum Herstellen der Verbindung zwischen dem Dienstprozess und dem Browser-Fenster, nachdem das Benutzerprivileg erfolgreich eskaliert ist.

10. Lokale Dienstbereitstellungsvorrichtung (100), umfassend:
ein Verbindungsherstellungsmodul (101), das zum Empfangen einer Verbindungsanforderung eingerichtet ist, die durch ein Browser-Fenster für einen entfernten Benutzer, der in eine elektronische Vorrichtung geladen ist, initiiert wird,
wobei die elektronische Vorrichtung mehr als ein Desktop-System aufweist, in das sich jeweilige entfernte Benutzer einloggen können;
als Reaktion auf eine Bestimmung, dass ein Dienstprozess und das Browser-Fenster zu demselben Desktop-System in der elektronischen Vorrichtung gemäß der empfangenen Verbindungsanforderung gehören, Herstellen einer Verbindung zwischen dem Dienstprozess und dem Browser-Fenster; und
ein Dienstbereitstellungsmodul (102), das zum Bereitstellen eines lokalen Dienstes für das Browser-Fenster über die hergestellte Verbindung eingerichtet ist.

11. Lokale Dienstbereitstellungsvorrichtung (100) nach Anspruch 10, wobei die Verbindungsanforderung eine erste Kennung trägt, wobei die erste Kennung mit aktuellen Attributinformationen des Browser-Fensters assoziiert ist, wobei die Attributinformationen zum Darstellen des Browser-Fensters dienen; und
das Verbindungsherstellungsmodul (101), wenn es bestimmt, dass der Dienstprozess und das Browser-Fenster zu demselben Desktop-System gemäß der empfangenen Verbindungsanforderung gehören, spezifisch eingerichtet ist zum:
falls ein Browser-Fenster mit Attributinformationen, die mit der ersten Kennung assoziiert sind, in mindestens einem Anwendungsfenster des Desktop-Systems, das dem Dienstprozess entspricht, vorhanden ist, Bestimmen, dass der Dienstprozess und das Browser-Fenster zu demselben Desktop-System gehören;
wobei, bevor die Verbindungsanforderung gesendet wird, ursprüngliche Attributinformationen des Browser-Fensters modifiziert werden, um mit der ersten Kennung assoziiert zu werden.

12. Lokale Dienstbereitstellungsvorrichtung (100) nach Anspruch 10, wobei das Dienstbereitstellungsmodul (102), wenn es den lokalen Dienst für das Browser-Fenster über die hergestellte Verbindung bereitstellt, spezifisch eingerichtet ist zum:
Empfangen einer Anforderung zum Erzeugen eines Fensters, die von dem Browser-Fenster über die Verbindung gesendet wird, wobei die Anforderung zum Erzeugen des Fensters eine zweite Kennung trägt, wobei die zweite Kennung mit aktuellen Attributinformationen des Browser-Fensters assoziiert ist, wobei die Attributinformationen zum Darstellen des Browser-Fensters dienen;
als Reaktion auf ein Herausfinden eines Browser-Fensters mit Attributinformationen, die mit der zweiten Kennung assoziiert sind, in mindestens einem Anwendungsfenster des Desktop-Systems, das dem Dienstprozess entspricht, Erzeugen eines Assoziationsfensters für das Browser-Fenster und Assoziieren des Assoziationsfensters mit dem Browser-Fenster;
das Dienstbereitstellungsmodul (102), wenn es das Assoziationsfenster mit dem Browser-Fenster assoziiert, spezifisch eingerichtet ist zum:
Einbetten des Assoziationsfensters in das Browser-Fenster als ein Unterfenster des Browser-Fensters;
oder,
Steuern des Assoziationsfensters, um dem Browser-Fenster gemäß einem eingestellten Folgemodus zu folgen, um einen Ort des Assoziationsfensters gemäß dem Folgemodus anzupassen, wenn ein Ort des Browser-Fensters geändert wird.

13. Elektronische Vorrichtung, **dadurch gekennzeichnet, dass** die elektronische Vorrichtung einen Prozessor (510) und einen Speicher (540) umfasst, der ein durch den Prozessor (510) aufgerufenes Programm speichert, wobei der Prozessor (510), wenn er das Programm ausführt, das lokale Dienstbereitstellungsverfahren nach einem der Ansprüche 1 bis 9 implementiert.

14. Maschinenlesbares Speichermedium, **dadurch gekennzeichnet, dass** ein Programm auf dem maschinenlesbaren Speichermedium gespeichert ist, wobei das Programm, wenn es durch einen Prozessor ausgeführt wird, das lokale Dienstbereitstellungsverfahren nach einem der Ansprüche 1 bis 9 implementiert.

15. Computerprogramm, wobei das Computerprogramm, wenn es durch einen Prozessor ausgeführt wird, das lokale Dienstbereitstellungsverfahren nach einem der Ansprüche 1 bis 9 implementiert.

## Revendications

1. Procédé de fourniture de service local comprenant :
l'exécution, par un processus de service dans un dispositif électronique, d'opérations comprenant :
la réception d'une demande de connexion initiée par une fenêtre de navigateur pour un utilisateur distant chargé dans le dispositif électronique, dans lequel le dispositif électronique a plus d'un système de bureau dans lequel des utilisateurs distants respectifs sont capables de se connecter ;
en réponse à la détermination que le processus de service et la fenêtre de navigateur appartiennent à un même système de bureau dans le dispositif électronique selon la demande de connexion reçue, l'établissement (S100) d'une connexion entre le processus de service et la fenêtre de navigateur ; et
la fourniture (S200) d'un service local pour la fenêtre de navigateur via la connexion établie.

2. Procédé de fourniture de service local selon la revendication 1, dans lequel la demande de connexion porte un premier identifiant, le premier identifiant étant associé à des informations d'attribut actuelles de la fenêtre de navigateur, les informations d'attribut étant destinées à représenter la fenêtre de navigateur ; et
la détermination que le processus de service et la fenêtre de navigateur appartiennent au même système de bureau selon la demande de connexion reçue, comprend :
dans le cas où une fenêtre de navigateur ayant des informations d'attribut associées au premier identifiant existe dans au moins une fenêtre d'application du système de bureau correspondant au processus de service, la détermination que le processus de service et la fenêtre de navigateur appartiennent au même système de bureau.

3. Procédé de fourniture de service local selon la revendication 2, dans lequel avant que la demande de connexion ne soit envoyée par la fenêtre de navigateur, des informations d'attribut d'origine de la fenêtre de navigateur sont modifiées pour être associées au premier identifiant.

4. Procédé de fourniture de service local selon la revendication 1, dans lequel la fourniture du service local pour la fenêtre de navigateur via la connexion établie comprend :
la réception d'une demande de création d'une fenêtre à partir de la fenêtre de navigateur via la connexion, la demande de création de la fenêtre portant un deuxième identifiant, le deuxième identifiant étant associé à des informations d'attribut actuelles de la fenêtre de navigateur, les informations d'attribut étant destinées à représenter la fenêtre de navigateur ;
en réponse à la découverte d'une fenêtre de navigateur ayant des informations d'attribut associées au deuxième identifiant dans au moins une fenêtre d'application du système de bureau correspondant au processus de service, la création d'une fenêtre d'association pour la fenêtre de navigateur, et l'association de la fenêtre d'association à la fenêtre de navigateur.

5. Procédé de fourniture de service local selon la revendication 4, dans lequel l'association de la fenêtre d'association à la fenêtre de navigateur comprend :
l'intégration de la fenêtre d'association dans la fenêtre de navigateur en tant que sous-fenêtre de la fenêtre de navigateur ;
ou
la commande de la fenêtre d'association pour suivre la fenêtre de navigateur selon un mode de suivi défini, de manière à ajuster un emplacement de la fenêtre d'association selon le mode de suivi lorsqu'un emplacement de la fenêtre de navigateur est changé.

6. Procédé de fourniture de service local selon l'une quelconque des revendications 1 à 5, dans lequel après que la connexion entre le processus de service et la fenêtre de navigateur est établie, le procédé de fourniture de service local comprend en outre :
le renvoi, à la fenêtre de navigateur, d'un troisième identifiant pour une interaction entre le processus de service et la fenêtre de navigateur.

7. Procédé de fourniture de service local selon les revendications 2 ou 3, dans lequel le premier identifiant est unique parmi tous les systèmes de bureau correspondant à des processus de service respectifs dans le dispositif électronique.

8. Procédé de fourniture de service local selon la revendication 4, dans lequel le deuxième identifiant est unique dans le système de bureau correspondant au processus de service.

9. Procédé de fourniture de service local selon l'une quelconque des revendications 1 à 8, dans lequel après que la connexion entre le processus de service et la fenêtre de navigateur est établie, le procédé de fourniture de service local comprend en outre :
lors de la réception d'une demande d'augmentation d'un privilège d'utilisateur à partir de la fenêtre de navigateur via la connexion, l'exécution d'une opération d'augmentation du privilège d'utilisateur selon la demande d'augmentation du privilège d'utilisateur, et le redémarrage du processus de service après que l'opération d'augmentation du privilège d'utilisateur est terminée pour amener l'opération d'augmentation du privilège d'utilisateur à prendre effet, et le renvoi pour exécuter les étapes respectives pour établir la connexion entre le processus de service et la fenêtre de navigateur après que le privilège d'utilisateur est augmenté avec succès.

10. Appareil de fourniture de service local (100), comprenant :
un module d'établissement de connexion (101), configuré pour recevoir une demande de connexion initiée par une fenêtre de navigateur pour un utilisateur distant chargé dans un dispositif électronique, dans lequel le dispositif électronique a plus d'un système de bureau dans lequel des utilisateurs distants respectifs sont capables de se connecter ;
en réponse à la détermination qu'un processus de service et la fenêtre de navigateur appartiennent à un même système de bureau dans le dispositif électronique selon la demande de connexion reçue, l'établissement d'une connexion entre le processus de service et la fenêtre de navigateur ; et
un module de fourniture de service (102), configuré pour fournir un service local pour la fenêtre de navigateur via la connexion établie.

11. Appareil de fourniture de service local (100) selon la revendication 10, dans lequel la demande de connexion porte un premier identifiant, le premier identifiant étant associé à des informations d'attribut actuelles de la fenêtre de navigateur, les informations d'attribut étant destinées à représenter la fenêtre de navigateur ; et
le module d'établissement de connexion (101), lors de la détermination que le processus de service et la fenêtre de navigateur appartiennent au même système de bureau selon la demande de connexion reçue, est spécifiquement destiné à :
dans le cas où une fenêtre de navigateur ayant des informations d'attribut associées au premier identifiant existe dans au moins une fenêtre d'application du système de bureau correspondant au processus de service, la détermination que le processus de service et la fenêtre de navigateur appartiennent au même système de bureau ;
dans lequel, avant que la demande de connexion ne soit envoyée, des informations d'attribut d'origine de la fenêtre de navigateur sont modifiées pour être associées au premier identifiant.

12. Appareil de fourniture de service local (100) selon la revendication 10, dans lequel le module de fourniture de service (102), lors de la fourniture du service local pour la fenêtre de navigateur via la connexion établie, est spécifiquement destiné à :
la réception d'une demande de création d'une fenêtre envoyée à partir de la fenêtre de navigateur via la connexion, la demande de création de la fenêtre portant un deuxième identifiant, le deuxième identifiant étant associé à des informations d'attribut actuelles de la fenêtre de navigateur, les informations d'attribut étant destinées à représenter la fenêtre de navigateur ;
en réponse à la découverte d'une fenêtre de navigateur ayant des informations d'attribut associées au deuxième identifiant dans au moins une fenêtre d'application du système de bureau correspondant au processus de service, la création d'une fenêtre d'association pour la fenêtre de navigateur, et l'association de la fenêtre d'association à la fenêtre de navigateur ;
le module de fourniture de service (102), lors de l'association de la fenêtre d'association à la fenêtre de navigateur, est spécifiquement destiné à :
l'intégration de la fenêtre d'association dans la fenêtre de navigateur en tant que sous-fenêtre de la fenêtre de navigateur ;
ou,
la commande de la fenêtre d'association pour suivre la fenêtre de navigateur selon un mode de suivi défini, de manière à ajuster un emplacement de la fenêtre d'association selon le mode de suivi lorsqu'un emplacement de la fenêtre de navigateur est changé.

13. Dispositif électronique, **caractérisé en ce que** le dispositif électronique comprend un processeur (510) et une mémoire (540) stockant un programme appelé par le processeur (510), dans lequel lors de l'exécution du programme, le processeur (510) met en œuvre le procédé de fourniture de service local selon l'une quelconque des revendications 1 à 9.

14. Support de stockage lisible par machine, **caractérisé en ce qu'**un programme est stocké sur le support de stockage lisible par machine, dans lequel le programme, lorsqu'il est exécuté par un processeur, met en œuvre le procédé de fourniture de service local selon l'une quelconque des revendications 1 à 9.

15. Programme informatique, dans lequel le programme informatique, lorsqu'il est exécuté par un processeur, met en œuvre le procédé de fourniture de service local selon l'une quelconque des revendications 1 à 9.
